# EUROPÄISCHE PATENTSCHRIFT

(11) **EP 3 481 664 B1**
(45) Veröffentlichungstag und Bekanntmachung des Hinweises auf die Patenterteilung: **07.12.2022**
(21) Anmeldenummer: 17739898.9
(22) Anmeldetag: 27.06.2017
(51) Int. Cl.: H02J 7/00, B60L 53/14, B60L 53/22, B60L 53/20

(54) **FAHRZEUGBORDNETZ, LADESYSTEM, LADESTATION UND VERFAHREN ZUR ÜBERTRAGUNG VON ELEKTRISCHER ENERGIE**
VEHICLE POWER NETWORK, CHARGING SYSTEM, CHARGING STATION AND METHOD FOR TRANSFER OF ELECTRICAL ENERGY
RÉSEAU DE BORD D'UN VÉHICULE, SYSTÈME DE CHARGE ET STATION DE CHARGE ET PROCÉDÉ DE TRANSFER D'ÉNERGIE ÉLECTRIQUE

(30) Priorität: 11.07.2016 DE 102016212543
(43) Veröffentlichungstag der Anmeldung: 15.05.2019
(60) Teilanmeldung: 22203891.1
(73) Patentinhaber: Vitesco Technologies GmbH, 93055 Regensburg (DE)
(72) Erfinder: PFEILSCHIFTER, Franz, 93059 Regensburg (DE); BROCKERHOFF, Philip, 93053 Regensburg (DE); BRÜLL, Martin, 93092 Barbing (DE); SCHWEIZER-BERBERICH, Paul-Markus, 10625 Berlin (DE); TÖNS, Matthias, 93049 Regensburg (DE); SCHIRMER, Edmund, 90409 Nürnberg (DE)
(74) Vertreter: Vitesco Technologies
(86) Internationale Anmeldenummer: PCT/EP2017/065827
(87) Internationale Veröffentlichungsnummer: WO 2018/010948

(56) Entgegenhaltungen:
- WO-A1-2013/093963
- WO-A1-2013/160031
- US-A1- 2012 181 990
- US-A1- 2015 054 469

## Beschreibung

Kraftfahrzeuge mit einem elektrischen Antrieb, d.h. Elektrofahrzeuge und Hybridfahrzeuge, umfassen einen elektrischen Energiespeicher zur Versorgung des elektrischen Antriebs.

Die Druckschrift WO 2013/160031 A1 beschreibt ein fahrzeuginternes Stromversorgungssystem mit mehreren Bordnetzzweigen, wobei ein Startergenerator mit einem Verbrennungsmotor verbunden ist. Ein Gleichspannungswandler, der nur für einen Teillastbetrieb ausgebildet ist, verbindet zwei fahrzeuginterne Teilnetze unterschiedlicher Nennspannung. Um eine maximale Leistungsanforderung in einem Teilnetz (Niedervolt) bedienen zu können, ist ein Überbrückungsschalter vorgesehen, der die Teilnetze bei hoher Leistungsanforderung verbindet, nachdem ein Energiespeicher innerhalb des anderen Teilnetzes (Hochvolt) abgetrennt wurde. Ein Mechanismus zur Übertragung von Energie ausgehend von fahrzeugexternen Quellen ist nicht vorgesehen.

Elektrofahrzeuge und Plug-In-Hybride sind mit einem Anschluss ausgestattet, mittels dem sich Energie von einem stationären elektrischen Versorgungsnetz (lokal oder öffentlich) zum Aufladen des Energiespeichers an diesen übertragen lässt. Gegebenenfalls sind die Fahrzeuge auch ausgestattet, elektrische Energie an das Versorgungsnetz zurückzuspeisen.

Zur Übertragung elektrischer Energie zwischen Versorgungsnetz und Fahrzeug sind leistungselektronische Komponenten erforderlich, insbesondere zur Steuerung der Energieübertragung. Vor allem bei hohen Ladeleistungen, etwa um besonders schnell zu laden, sind teure Komponenten erforderlich.

Im Stand der Technik sind Schaltungen zur Übertragung von Energie zwischen einer Ladestation und einem Fahrzeug bekannt, die zur Spannungsanpassung einen Spannungswandler nutzen. Die Druckschrift US 2012/0181990 zeigt exemplarisch eine Ladeschaltung, die von verschiedenen (stationären) Quellen gespeist werden kann. Ein zu ladendes Fahrzeug ist über eine Schaltervorrichtung an einen Gleichspannungswandler angeschlossen, der von einer der Quellen gespeist wird. Die Schaltervorrichtung dient zur Abtrennung des Fahrzeugs. Der Gleichspannungswandler ist der Schaltervorrichtung vorgeschaltet und dient während des gesamten Ladevorgangs zur Spannungsanpassung zwischen Quelle und Fahrzeug. Dadurch muss der Gleichspannungswandler für die maximale Ladeleistung ausgelegt sein. WO2013093963 A1 offenbart ein Fahrzeugbordnetz mit einem Energiespeicher, einem Gleichspannungswandler und einem Gleichstrom-Übertragungsanschluss, wobei der Gleichstrom-Übertragungsanschluss über den Gleichspannungswandler mit dem Energiespeicher verbunden ist, wobei das Fahrzeugbordnetz ferner einen Überbrückungsschalter aufweist, der den Energiespeicher mit dem Gleichstrom-Übertragungsanschluss schaltbar verbindet.

Es ist eine Aufgabe der Erfindung, eine Möglichkeit aufzuzeigen, mit der sich der Aufwand an derartigen Komponenten reduzieren lässt oder auch mit der sich hohe Ladeleistungen mit reduziertem Aufwand für die Leistungselektronik erreichen lassen.

Diese Aufgabe wird gelöst durch den Gegenstand der unabhängigen Ansprüche. Weitere Vorteile, Merkmale, Ausführungsformen und Eigenschaften ergeben sich mit den abhängigen Ansprüchen sowie aus dieser Beschreibung und den Figuren.

Es wird vorgeschlagen, in einem Fahrzeugbordnetz einen Gleichspannungswandler (im Weiteren: DCDC-Wandler), der einen elektrischen Energiespeicher mit einem Gleichstrom-Übertragungsanschluss (im Weiteren: DC-Plugin) verbindet, zu überbrücken, wenn beim Ladevorgang eine Spannung an den Wechselrichter angelegt wird, die sich zum direkten Zuführen an den Energiespeicher eignen würde (d.h. Belastungsgrenzen des Energiespeichers nicht überschritten werden) . Mit anderen Worten wird etwa bei einem zu niedrigen Ladezustand bzw. einer zu geringen Spannung des Energiespeichers die Leistung über den DCDC-Wandler übertragen, insbesondere um die Spannung des DC-Plugins an eine (geringere) Spannung für den Energiespeicher anzupassen. Ist die Spannung bzw. der Ladezustand des Energiespeichers ausreichend an die Spannung am DC-Plugin angepasst (die sich etwa durch Gleichrichten einer Wechselspannung eines Versorgungsnetzes ergibt), wird die Ladeenergie nicht mehr über den DCDC-Wandler, sondern direkt vom DC-Plugin an die Batterie übertragen. Dies wird möglich, wenn der DCDC-Wandler überbrückt wird, d.h. wenn ein Überbrückungsschalter (parallel zum DCDC-Wandler) geschlossen ist. Dies ist auch auf eine Ladestation übertragbar.

Dadurch kann etwa ein Gleichspannungswandler (DCDC-Wandler) innerhalb des Fahrzeugs, der bei der Traktion verwendet wird, auch zum Laden verwendet werden. Ist die Traktionsleistung gegenüber der Ladeleistung gering, so ist es nicht notwendig, den DCDC-Wandler auf die höhere Ladeleistung auszulegen. Stattdessen wird zum Erzielen einer hohen Ladeleistung der Überbrückungsschalter geschlossen (im Fahrzeug und/oder der Bypassschalter in der Ladestation). Dies kann in einem Bereich ausgeführt werden, in dem die Plug-In-Spannung im Wesentlichen der Energiespeicherspannung entspricht, so dass kein hoher Schaltstrom entsteht oder der Energiespeicher überlastet wird, wenn der Schalter geschlossen wird. Auch der DCDC-Wandler in der Ladestation kann zunächst nur dazu verwendet werden, die von der Ladestation abgegebene Spannung zu erhöhen, bis die Abweichung zur Energiespeicherspannung unter einem vorgegebenen Betrag liegt. Ab diesem Punkt wird der Schalter geschlossen, der den DCDC-Wandler der Ladestation überbrückt, und es kann mit höherer Leistung geladen werden. Auch hierbei kann der DCDC-Wandler der Ladestation für vergleichsweise geringe Leistungen ausgelegt sein, da ein Schnellladeprozess bei geschlossenem Schalter durchgeführt wird. Der Schalter, der den DCDC-Wandler des Fahrzeugbordnetzes überbrückt, wird als Überbrückungsschalter bezeichnet. Zur Differenzierung wird der Schalter, der den DCDC-Wandler überbrückt, mit einem Synonym bezeichnet, nämlich als Bypassschalter.

Ein Konzept der hier beschriebenen Vorgehensweise wird von einem Verfahren zur Übertragung von elektrischer Energie wiedergegeben. Die Energie wird zwischen einem Energiespeicher eines Fahrzeugbordnetzes und einer Ladestation über einen Gleichspannungswandler des Fahrzeugbordnetzes übertragen. Alternativ wird die Energie zwischen dem Energiespeicher und der Ladestation über einen stationären Gleichspannungswandler der Ladestation übertragen. Ferner kann die Energie über beide Gleichspannungswandler übertragen werden.

Der Gleichspannungswandler oder die Gleichspannungswandler wird bzw. werden überbrückt, wenn die Spannung über dem betreffenden Spannungswandler unter einem vorgegebenen Betrag liegt. Die Spannungsdifferenz bezieht sich insbesondere auf die Leerlaufspannung des Energiespeichers, an den der Gleichspannungswandler direkt (im Falle des fahrzeugseitigen Gleichspannungswandlers) angeschlossen ist, bzw. an den der Gleichspannungswandler indirekt (im Falle des ladestationsseitigen Gleichspannungswandlers) angeschlossen ist.

Der oder die Gleichspannungswandler wird überbrückt bzw. werden überbrückt, wenn die Spannungsdifferenz zwischen derjenigen Spannung, welche an der dem Energiespeicher abgewandten Seite des betreffenden Spannungswandlers anliegt, und der Leerlaufspannung des Energiespeichers unter einem vorgegebenen Betrag liegt. Zur Ermittlung, ob der die Spannungsdifferenz unter dem vorgegebenen Betrag liegt, oder nicht, kann der Absolutwert der Spannungsdifferenz mit dem Betrag verglichen werden. Insbesondere entspricht die Spannungsdifferenz der Leerlaufspannung des Energiespeichers abzüglich der Spannung, die wie erwähnt am Spannungswandler anliegt. Die Leerlaufspannung kann gemessen werden durch eine Spannungsmessung bei einem Stromfluss von im Wesentlichen null, durch Spannungsmessungen und zugehörige Strommessungen bei unterschiedlichen Strömen, durch Abfrage einer Batteriemanagementeinheit oder ähnliches.

Insbesondere wird die Energie über einen Inverter der Ladestation übertragen, der zwischen einem stationären Versorgungs-Wechselstromnetz und dem Gleichspannungswandler der Ladestation geschaltet ist. Die Energie kann zum Fahrzeugbordnetz hin (Laden) oder von diesem weg (Rückspeisen) übertragen werden. Vorzugsweise wird zunächst übertragen, bis über dem später überbrückten Wandler eine Spannungsdifferenz (insbesondere bezogen auf die Leerlaufspannung des Energiespeichers) unter einem vorgegebenen Betrag liegt, wobei dieser Betrag einer Schaltleistung entspricht, die nicht größer ist als die maximal zulässige Schaltleistung eines Schalters, mittels dem überbrückt wird. Es kann ein Spannungszustand des Energiespeichers vom Fahrzeugbordnetz als Datensignal an die Ladestation übertragen werden, wobei der Spannungszustand durch die Leerlaufspannung oder Klemmenspannung (oder auch durch den Ladezustand) des Energiespeichers charakterisiert sein kann. Ferner kann ein Fehlersignal vom Fahrzeugbordnetz an die Ladestation übertragen werden, das unabhängig von dem Spannungszustand des Wandlers der Ladestation eine dort vorliegende Überbrückung beendet. Während dem Überbrücken sind die Wandler bzw. ist der Wandler vorzugsweise inaktiv.

Es wird ferner ein Fahrzeugbordnetz mit einem elektrischen Energiespeicher, einen Gleichspannungswandler (DCDC-Wandler) und einem Gleichstrom-Übertragungsanschluss (DC-Plugin) beschrieben. Der DC-Plugin ist über den DCDC-Wandler mit dem Energiespeicher verbunden. Der DCDC-Wandler verbindet den DC-Plugin mit dem Energiespeicher.

Das Fahrzeugbordnetz weist einen Überbrückungsschalter auf. Dieser verbindet den Energiespeicher mit dem DC-Plugin in schaltbarer Weise. Insbesondere ist der Überbrückungsschalter parallel zu dem DCDC-Wandler bzw. parallel zu den Seiten des DCDC-Wandlers anschlossen. Der Überbrückungsschalter verbindet die beiden Seiten des DCDC-Wandlers, zwischen denen die Spannungswandlung stattfindet. Mit anderen Worten überbrückt der Überbrückungsschalter den DCDC-Wandler (in schaltbarer Weise).

Es ist eine Steuereinheit vorgesehen, die den Überbrückungsschalter in geschlossenem Zustand ansteuert, wenn eine direkte Verbindung zwischen DC-Plug und Energiespeicher zu einem Energiefluss führen würde, der nicht über einer Belastungsgrenze des Energiespeichers liegt. Eine andere Betrachtungsweise ist es, dass der Überbrückungsschalter nur dann geschlossen wird, wenn das Schließen des Überbrückungsschalters zu einer Belastung (durch den Schaltstrom) des Überbrückungsschalters führen würde, die unter einem vorgegebenen Schaltstrombetrag liegt. Insbesondere wird der Überbrückungsschalter nur dann geschlossen, wenn die Spannungsdifferenz über dem DCDC-Wandler (d.h. der Unterschied zwischen der Spannung am Energiespeicher, insbesondere dessen Leerlaufspannung, und der Spannung am DC-Plug) im Wesentlichen null ist. Es kann daher bei der Entscheidung über den Schaltzustand des Überbrückungsschalters auf die Belastung des Energiespeichers oder des Überbrückungsschalters (beim Schließen) abgestellt werden. Insbesondere wird der Überbrückungsschalter nur dann geschlossen, wenn die direkte Verbindung zwischen DC-Plug und Energiespeicher zu einem Energiefluss führen würde, der nicht über einer Belastungsgrenze des Energiespeichers liegt.

Die Abschätzung, ob die Belastungsgrenze erreicht wird oder nicht, basiert vorzugsweise auf der Spannungsdifferenz zwischen der Spannung des Energiespeichers und der Spannung am DC-Plugin. Dies entspricht der Spannung über dem DCDC-Wandler, d.h. der Spannungsdifferenz zwischen den Seiten des DCDC-Wandlers. Dies ist insbesondere bezogen auf die Leerlaufspannung des Energiespeichers, der direkt oder indirekt an einer Seite des betreffenden DCDC-Wandlers angeschlossen ist. Bezieht sich dies auf die Klemmenspannung, so wird der fließende Strom dahingehend berücksichtigt, dass die Schaltleistung bzw. der Schaltstrom des überbrückenden Schalters unter einer vorgegebenen Schaltleistung bzw. unter einem vorgegebenen Maximalschaltstrom liegt. Ist diese bzw. dieser geringer als ein vorbestimmter Betrag, wird davon ausgegangen, dass die Belastungsgrenze nicht überschritten wird bzw. dass ein maximaler Schaltstrom des Überbrückungsschalters nicht überschritten wird. Ansonsten wird davon ausgegangen, dass eine Belastungsgrenze durch das Schließen des Überbrückungsschalters oder durch den geschlossenen Überbrückungsschalters überschritten werden würde. Die Belastungsgrenze kann sich auf den Überbrückungsschalter beziehen oder auf den Energiespeicher.

Ein Ladevorgang kann daher mittels des Fahrzeugbordnetzes wie folgt durchgeführt werden: Laden des Energiespeichers über den DCDC-Wandler, wenn der Spannungszustand des Energiespeichers um mehr als einen vorgegebenen (zulässigen) Abweichungsbetrag von der Spannung am DC-Plugin abweicht. Ferner ist ein Laden des Energiespeichers über den Überbrückungsschalter vorgesehen (bzw. ein Schließen des Überbrückungsschalters), wenn die Abweichung zwischen den genannten Größen nicht größer als ein vorgegebener Betrag ist. Überbrückungsschalter wird insbesondere geschlossen, wenn der Energiespeicher in etwa die Gleichspannung aufweist (Klemmenspannung oder Leerlaufspannung), die sich durch Gleichrichten einer Wechselspannung ergibt.

Befindet sich in der Ladestation ein stationärer Gleichspannungswandler, kann auch dieser überbrückt werden, wenn sich dadurch keine Überschreitung von Belastungsgrenzen des Energiespeichers oder des Schalters gibt, mit dem die Überbrückung durchgeführt wird.

Es wird beim Laden des Energiespeichers über den Überbrückungsschalter vorzugsweise mit einer höheren Leistung geladen als beim Laden des Energiespeichers über den DCDC-Wandler. Die beiden Leistungen können ein Verhältnis von 2:1, 3:1 oder 4:1 aufweisen. Mit anderen Worten kann der DCDC-Wandler für eine geringere Leistung als die maximale Ladeleistung des Energiespeichers ausgelegt sein, etwa für eine Leistung von nicht mehr als 10%, 15%, 20% oder auch von nicht mehr als 40%, 50% oder 60% der maximalen Ladeleistung des Energiespeichers oder eines Inverters innerhalb der Ladestation. Diese Auslegung der Leistung kann für den DCDC-Wandler innerhalb des Bordnetzes, für einen DCDC-Wandler innerhalb der Ladestation oder für beide gelten. Es können für den DCDC-Wandler innerhalb des Bordnetzes andere Werte als für den DCDC-Wandler innerhalb der Ladestation gelten.

Der DCDC-Wandler des Bordnetzes-Wandler kann eine Nennleistung aufweisen, die geringer ist, als die maximale Ladeleistung des Energiespeichers. Der DCDC-Wandler des Bordnetzes-Wandler kann eine Nennleistung aufweisen, die nicht mehr als 10%, 15%, 20% oder auch von nicht mehr als 40%, 50% oder 60% der maximalen Ladeleistung des Energiespeichers beträgt.

Der DCDC-Wandler der Ladestation kann eine Nennleistung aufweisen, die geringer ist als die Nennleistung des Inverters der Ladestation. Der DCDC-Wandler der Ladestation kann eine Nennleistung aufweisen, die nicht mehr als 10%, 15%, 20% oder auch von nicht mehr als 40%, 50% oder 60% der Nennleistung des Inverters der Ladestation beträgt.

Der Überbrückungsschalter ist für Leistungen bzw. Ströme ausgelegt, die mindestens der Maximal-Leistungen oder -Strömen des Energiespeichers entsprechen oder insbesondere mindestens 20% oder auch mindestens 40% über diesen liegen. Dies gilt für Zustände, in denen nicht geschaltet wird, d.h. für die Dauerlast des Überbrückungsschalters und nicht für die Schaltleistung.

Es kann im Fahrzeugbordnetz ein Wechselrichter vorgesehen sein, der eine elektrische Maschine mit dem DCDC-Wandler verbindet. Die elektrische Maschine kann im Fahrbetrieb so über den DCDC-Wandler und den Wechselrichter (in dieser Reihenfolge) mit Energie von dem Energiespeicher versorgt werden.

Der DCDC-Wandler ist insbesondere ein Hochsetzsteller, etwa ein Synchronwandler. Der Energiespeicher ist insbesondere ein Hochvolt-Speicher (d.h. mit einer Nennspannung von mindestens 60V, 120V, 240V, 360V oder 380 V), etwa ein Hochvolt- Akkumulator. Der Energiespeicher ist insbesondere ein Lithium-basierter Akkumulator (etwa ein Li-Ionen-Akkumulator). Der Energiespeicher ist vorzugsweise ein Akkumulator oder umfasst mit anderen Worten einen Stapel von galvanischen Zellen (insbesondere Sekundärzellen), die als Energiespeichereinheiten des Energiespeichers miteinander verbunden sind. Der elektrische Energiespeicher ist insbesondere ein Akkumulator, beispielsweise ein Lithium-basierter Akkumulator (etwa ein Lithium-Ionen-Akkumulator) . Der elektrische Energiespeicher kann ein Traktionsakkumulator sein. Der Energiespeicher kann eine Nennspannung von 40 - 60 V aufweisen, insbesondere von 48 V, und kann insbesondere eine Nennspannung von mehr als 100 Volt, insbesondere von mindestens 200 oder 300 V, beispielsweise von 350 - 420 V, aufweisen.

Die elektrische Maschine ist insbesondere eine Drehstrommaschine. Die elektrische Maschine ist mehrphasig, insbesondere 3- oder 6-phasig. Die elektrische Maschine kann eine fremderregte oder permanenterregte elektrische Maschine sein. Es kann vorgesehen sein, dass die elektrische Maschine einen Sternpunkt aufweist; andere Konfigurationen sehen eine Dreieckkonfiguration der elektrischen Maschine vor. Die positive Schiene kann über den Sternpunkt mit den Phasenstromanschlüssen (des Wechselrichters) verbunden sein.

Der Gleichstrom-Übertragungsanschluss kann ein Plugin-Inlet umfassen, d.h. ein elektromechanisches Steckverbindungselement, das sich in der Außenhaut eines Fahrzeugs montieren lässt. Der Gleichstrom-Übertragungsanschluss ist eingerichtet, mit einem Ladestecker (bzw. allgemeiner: Verbindungsstecker) verbunden zu werden.

Es ist eine Steuereinheit vorgesehen, die den Überbrückungsschalter ansteuert. Ferner kann dieser Steuereinheit oder eine weitere Steuereinheit vorgesehen sein, welche den Gleichspannungswandler und gegebenenfalls den Wechselrichter ansteuert. Die Steuereinheit ist ansteuernd mit dem Überbrückungsschalter und insbesondere mit dem Gleichspannungswandler verbunden. In einem Wechselrichtungsmodus der Steuereinheit wird der Wechselrichter angesteuert, aus der Gleichspannung des Energiespeichers Phasenspannungen zu erzeugen, die an den Phasenanschlüssen anliegen. In einem (optionalen) Rekuperationsmodus steuert die Steuereinheit den Wechselrichter an, aus den Phasenspannungen an den Phasenanschlüssen eine Ladespannung an dem Energiespeicher zu erzeugen. In einem (optionalen) Rückspeisemodus steuert die Steuereinheit den Wechselrichter an, aus der Spannung, die an dem Energiespeicher des Fahrzeugbordnetzes anliegt, eine Rückspeisespannung an dem Gleichstrom-Übertragungsanschluss zu erzeugen.

In einem Lademodus steuert die Steuereinheit den DCDC-Wandler an, um aus der Spannung, die an dem Gleichstrom-Übertragungsanschluss anliegt, eine Ladespannung an dem Energiespeicher zu erzeugen. Dies führt die Steuereinheit aus, wenn der Überbrückungsschalter offen ist. Im geschlossenen Zustand steuert die Steuereinheit den DCDC-Wandler nicht an bzw. steuert diesen so an, dass durch diesen kein Strom fließt (etwa durch Öffnen aller Schalter des DCDC-Wandlers).

Der DCDC-Wandler weist Halbleiterschalter bzw. Schaltelemente auf. Diese sind vorzugsweise Transistoren, insbesondere Feldeffekt- oder Bipolar-Transistoren, beispielsweise MOSFETs oder IGBTs.

Der Überbrückungsschalter kann sich insbesondere in der positiven Schiene des Fahrzeugbordnetzes befinden. Hierbei weisen der DCDC-Wandler und der Energiespeicher eine gemeinsame Masse auf (so dass der Überbrückungsschalter in der positiven Schiene schaltet bzw. überbrückt)

Der DC-Plugin weist vorzugsweise ein negatives Potential auf, das mit einem negativen Anschluss des DCDC-Wandlers verbunden ist. Der Gleichspannungs-Übertragungsanschluss kann ein positives Potential aufweisen, das mit einem positiven Anschluss des Gleichspannungswandlers verbunden ist. Der Überbrückungsschalter verbindet vorzugsweise den positiven Anschluss des DCDC-Wandlers mit einem Pluspol des elektrischen Energiespeichers.

Wie erwähnt weist das Fahrzeugbordnetz ferner eine Steuereinheit auf. Diese ist ansteuernd mit dem Gleichspannungswandler und/oder mit dem Überbrückungsschalter verbunden ist. Die Steuereinheit ist ferner mit dem Energiespeicher verbunden, insbesondere um von diesem Signale zu erhalten, etwa Messsignale, Zustandssignale oder daraus abgeleitete Signale. Die Steuereinheit ist eingerichtet, die Spannung des Energiespeichers zu ermitteln. Diese gibt insbesondere wieder, ob sich der Energiespeicher in einem Zustand befindet, in dem eine Versorgung über den Überbrückungsschalter nicht zu einer Überlastung des Energiespeichers oder des Überbrückungsschalters führen würde. Die Abweichung ist ein Maß dafür, welche Leistung bzw. welcher Strom bzw. welche Ladespannung dem Energiespeicher zugeführt werden kann und ist insbesondere ein Maß dafür, wie weit die Belastungsgrenze (hinsichtlich Strom, Spannung oder Leistung) des Energiespeichers oder die Belastungsgrenze des Überbrückungsschalters (insbesondere der maximale Schaltstrom) von einem Betriebspunkt entfernt ist, der sich ergeben würde, wenn der DC-Plugin über den Überbrückungsschalter direkt mit dem Energiespeicher verbunden werden würde. Die Abweichung kann als Marge angegeben werden, die den Abstand zur Belastungsgrenze des Energiespeichers angibt.

Die Steuereinheit ist ferner mit dem Gleichstrom-Übertragungsanschluss verbunden und eingerichtet ist, dessen Spannung zu ermitteln. Die Steuereinheit kann eine Spannungsmesseinheit für diesen Zweck aufweisen oder einen Dateneingang, über den die Spannung von einer Batteriemanagementeinheit des Energiespeichers von der Steuereinheit als Wert empfangen wird.

Die Steuereinheit ist ferner eingerichtet, eine Abweichung zwischen dem Spannungszustand des Energiespeichers und der Spannung des Gleichstrom-Übertragungsanschlusses zu ermitteln. Hierzu kann die Steuereinheit eine Differenzbildungseinrichtung oder ein Rechenwerk für diesen Zweck aufweisen. Die Steuereinheit ist zudem eingerichtet, den Überbrückungsschalter in einem geschlossenen Zustand vorzusehen (etwa durch Abgabe eines entsprechenden Ansteuersignals), wenn die Abweichung nicht größer als ein vorgegebener Betrag ist. Die Steuereinheit ist eingerichtet, den Überbrückungsschalter in einem offenen Zustand vorzusehen, wenn die Abweichung größer als der vorgegebene Betrag ist. Der Betrag kann mit zunehmender Temperatur ab einem vorbestimmten Temperaturwert abfallen, kann mit der Temperatur unter einem vorbestimmten, weiteren Temperaturwert mit der Temperatur abfallen, kann mit zunehmender Alterung abfallen, kann mit abnehmendem Innenwiderstand abnehmen, oder kann konstant sein. Die Alterung, der Innenwiderstand und die Temperatur beziehen sich auf den Energiespeicher oder auf den Überbrückungs- oder Bypassschalter.

Die Steuereinheit ist ferner eingerichtet, aus der Klemmenspannung des Energiespeichers die Leerlaufspannung zu ermitteln (etwa anhand eines gemessenen Energiespeicher-Stroms), um diese Größe als Spannungszustand zu verwenden. Ferner kann die Steuereinheit eingerichtet sein, aus dem Ladezustand und/oder dem Alterungszustand (erhalten von einer Batteriemanagementeinheit des Energiespeichers) den Spannungszustand (im Sinne einer Leerlaufspannung) zu ermitteln. Anhand dieser Abschätzung bzw. Prognose wird der Überbrückungsschalter angesteuert, insbesondere derart, dass die Belastungsgrenze bzw. die Stromaufnahmefähigkeit des Energiespeichers nicht überschritten wird.

Der Spannungszustand kann durch einen Wert dargestellt werden, der einen Ladezustand, eine Klemmenspannung, eine Leerlaufspannung oder einen Maximal-Ladestrom wiedergibt. Die Steuereinheit ist eingerichtet, gemäß diesem Wert den Überbrückungsschalter anzusteuern.

Die Steuereinheit (des Fahrzeugbordnetzes) kann ferner eingerichtet sein, bei einer Stromaufnahmefähigkeit, die über dem Schwellenwert liegt, einen Strom-, Spannungs- oder Leistungswert als Sollwert zu übermitteln, insbesondere an eine Steuereinheit der Ladestation, welche eingerichtet ist, an dem DC-Plugin einen Strom, eine Spannung oder eine Leistung abzugeben, die dem Sollwert entspricht. Die Steuereinheit (des Fahrzeugbordnetzes) kann eingerichtet sein, bei einer Stromaufnahmefähigkeit, die den Schwellenwert nicht übersteigt, an den Gleichspannungswandler einen Strom-, Spannungs- oder Leistungswert als Sollwert abzugeben. Mit anderen Worten ist die Steuereinheit eingerichtet, bei nicht ausreichender Stromaufnahmefähigkeit des Energiespeichers (d.h. wenn der Schwellenwert nicht überschritten wird bzw. wenn die Belastungsgrenze bei geschlossenem Überbrückungsschalter überschritten werden würde) den DCDC-Wandler des Fahrzeugbordnetzes anzusteuern, um die Ladeleistung, den Ladestrom und/oder die Ladespannung einzustellen, und ist eingerichtet andernfalls ein Steuersignal (d.h. einen Sollwert) abzugeben, der von einer stationären Steuereinheit empfangen und als Sollwert verwendet werden kann. Mit dem Schließen des Überbrückungsschalters wird daher von der Steuereinheit die Ansteuerung des DCDC-Wandlers (fahrzeugseitig) gemäß Sollwert gewechselt auf die Ansteuerung der Ladestation bzw. deren Wandler. Die Steuereinheit des Fahrzeugbordnetzes ist eingerichtet, die Schalter des DCDC-Wandlers des Fahrzeugbordnetzes gemäß einem offenen Zustand anzusteuern, wenn der Überbrückungsschalter geschlossen ist (und somit der DCDC-Wandler des Fahrzeugbordnetzes überbrückt wird).

Die Steuereinheit kann ferner eine Sendeeinheit aufweisen. Diese ist eingerichtet, den Spannungszustand des Energiespeichers, die Abweichung oder einen Schaltzustand des Überbrückungsschalters des Fahrzeugbordnetzes zu senden, insbesondere an eine Empfangseinheit der Ladestation.

Es kann vorgesehen sein, dass der vorgegebene Betrag nicht mehr als 10%, 5%, 2% oder 1% der Nennspannung des Energiespeichers 10 beträgt.

Die Steuereinheit (des Fahrzeugbordnetzes) ist insbesondere ansteuernd mit dem Gleichspannungswandler verbunden ist. Die Steuereinheit ist eingerichtet, diesen bei geschlossenem Überbrückungsschalter in einem inaktiven Zustand vorzusehen (etwa mit geöffneten Schaltelementen des DCDC-Wandlers). Die Steuereinheit ist ferner eingerichtet, bei offenen Überbrückungsschalter den DCDC-Wandler in einem aktiven Zustand vorzusehen. Dies kann durch direkt Ansteuerung des DCDC-Wandlers mittels der Steuereinheit geschehen, oder durch Ansteuerung einer Treiberschaltung oder Ansteuerungsschaltung, die die Schaltsignale für die Schaltelemente des DCDC-Wandlers erzeugt.

Es wird ferner ein nicht anspruchsgemäßes Ladesystem (im Sinne einer Vorrichtung) zum besseren Verständnis des erfindungsgemäßen Fahrzeugbordnetzes, der erfindungsgemäßen Ladestation und des erfindungsgemäßen Verfahrens beschrieben. Das Ladesystem umfasst eine mobile, zu ladende Einheit (das Fahrzeug welches ein wie hier beschriebenes Fahrzeugbordnetz) aufweist, sowie eine Ladestation. Die Ladestation weist einen (stationären) Inverter auf und verfügt ferner über einen (stationären) Gleichspannungsladeanschluss und einen (stationären) Gleichspannungswandler. Parallel zu dem stationären Gleichspannungswandler ist ein stationärer Schalter angeschlossen ist. Dieser ist eingerichtet, von einem Signal, das von dem Fahrzeugbordnetz übermittelt wird, angesteuert zu werden bzw. ist eingerichtet, gemäß einem Sollwert, der von dem Fahrzeugbordnetz gesendet wird, angesteuert zu werden. Ferner kann vorgesehen sein, dass der (stationäre) Inverter und/oder der (stationäre) Gleichspannungswandler eingerichtet sind, gemäß einem vom Fahrzeugbordnetz gesendeten Sollwert zu arbeiten. Dadurch kann auch der stationäre Gleichspannungswandler überbrückt werden, wenn eine direkte Übertragung gleichgerichteter Wechselspannung des Versorgungsnetzes nicht zu einer Überlastung des Energiespeichers führen würde. Es wird ladestationsseitig nicht überbrückt, wenn dies zu einer Überlastung des Energiespeichers (des Fahrzeugbordnetzes) führen würde. Anstatt eines Inverters kann auch ein (gesteuerter oder ungesteuerter) Gleichrichter in der Ladestation verwendet werden.

Die Ladestation kann eine Empfangseinheit aufweisen, die eingerichtet ist, den Spannungszustand des Energiespeichers, die Abweichung oder einen Schaltzustand des Überbrückungsschalters des Fahrzeugbordnetzes zu empfangen, etwa durch Empfangen eines Signals, das von der Steuereinheit des Fahrzeugbordnetzes oder von einer Sendeeinheit dieser Steuereinheit übermittelt wird. Die Steuereinheit kann der Empfangseinheit nachgeschaltet sein oder die Empfangseinheit kann ein Teil der Steuereinheit bilden. Die Steuereinheit ist eingerichtet, die betreffenden Daten (Spannungszustand, Abweichung oder/oder Schaltzustand) von der Empfangseinheit zu beziehen.

Die stationäre Steuereinheit (d.h. die Steuereinheit der Ladestation) ist insbesondere mit einem Verbindungspunkt zwischen dem stationären Gleichspannungsladeanschluss und dem stationären Inverter verbunden. Diese Steuereinheit ist eingerichtet ist, die Spannung am Verbindungspunkt zu ermitteln.

Die stationäre Steuereinheit ist vorzugsweise ferner eingerichtet ist, eine Abweichung zwischen dem Spannungszustand des Energiespeichers und der Spannung des Verbindungspunkts zu ermitteln. Die stationäre Steuereinheit ist eingerichtet, den stationären Bypassschalter in einem geschlossenen Zustand vorzusehen, wenn die Abweichung nicht größer als ein vorgegebener Betrag ist. Die stationäre Steuereinheit ist eingerichtet, den Überbrückungsschalter in einem offenen Zustand vorzusehen, wenn die Abweichung größer als ein vorgegebener Betrag ist. Auch dieser Betrag kann wie vorangehend ausgeführt von der Alterung, der Temperatur und/oder dem Innenwiderstand des Energiespeichers oder des Bypassschalters abhängen, oder auch von dem Ladezustand des Energiespeichers.

Das Fahrzeugbordnetz kann einen Wechselstrom-Übertragungsanschluss aufweisen. Dieser kann über Wicklungen der elektrischen Maschine mit dem Wechselrichter des Fahrzeugbordnetzes (bzw. mit dessen Wechselstromseite) verbunden sein. Der Wechselstrom-Übertragungsanschluss kann mehrphasig sein, beispielsweise dreiphasig. Eine Gleichstromseite des Wechselrichters des Fahrzeugbordnetzes ist mit dem DCDC-Wandler und mit dem DC-Plugin des Fahrzeugbordnetzes verbunden.

Das Fahrzeugbordnetz ist insbesondere das Bordnetz eines Plug-in-Hybridkraftfahrzeugs oder eines Elektrokraftfahrzeugs.

Ferner wird eine Ladestation beschrieben. Die Ladestation ist mit einem stationären Inverter, einem stationären Gleichspannungsladeanschluss und einem stationären Gleichspannungswandler ausgestattet. Der Gleichspannungswandler verbindet den Inverter mit dem stationären Gleichspannungsladeanschluss. Parallel zu dem stationären Gleichspannungswandler ist ein (stationärer) Bypassschalter angeschlossen ist. Dieser überbrückt (sofern im geschlossenen Zustand) den stationären Gleichspannungswandler (d.h. den DCDC-Wandler der Ladestation). Die Ladestation weist eine stationäre Steuereinheit auf. Dieser ist ansteuernd mit dem Bypassschalter verbunden.

Eine nicht anspruchsgemäße Ausführungsform einer Ladestation, die zum besseren Verständnis des beanspruchten Gegenstands dient, kann eine Empfangseinheit aufweisen. Diese kann eingerichtet sein, einen Spannungszustand eines Energiespeichers eines an die Ladestation angeschlossenen Fahrzeugbordnetzes, einen Schaltbefehl oder einen Schaltzustand eines Überbrückungsschalters eines (angeschlossenen) Fahrzeugbordnetzes zu empfangen. Die Empfangseinheit ist vorzugsweise mit der stationären Steuereinheit verbunden. Die Steuereinheit ist insbesondere eingerichtet, den Bypassschalter in einem geschlossenen Zustand vorzusehen, wenn der Spannungszustand des Energiespeichers nicht mehr als um einen vorgegebenen Betrag von einer Spannung abweicht, die zwischen dem Inverter und dem stationären Gleichspannungswandler vorliegt, wenn ein Schaltbefehl zum Schließen des Bypassschalter vorliegt, oder wenn der Schaltzustand des Überbrückungsschalters des Fahrzeugbordnetzes geschlossen ist. Das "oder" verknüpft hierbei nur die einzelnen Merkmale der Ereignisabhängigkeit, nicht die Ereignisse selbst. Die Steuereinheit ist ansonsten eingerichtet, den stationären Bypassschalter gemäß einem offenen Schaltzustand anzusteuern.

Es wird ferner ein nicht anspruchsgemäßes Fahrzeugbordnetz mit einem elektrischen Energiespeicher, einem Gleichspannungswandler (auch als DCDC-Wandler bezeichnet) und einem Wechselrichter beschrieben, das zum besseren Verständnis des beanspruchten Gegenstands dient. Der Energiespeicher, der Gleichspannungswandler und der Wechselrichter entsprechen vorzugsweise dem vorangehend und im Folgenden genannten Energiespeicher, Gleichspannungswandler und Wechselrichter. Der Wechselrichter ist über den Gleichspannungswandler mit dem Energiespeicher verbunden ist. Dem Wechselrichter ist eine elektrische Maschine (E-Motor) nachgeschaltet. Die elektrische Maschine ist über den Wechselrichter direkt über den im Weiteren beschriebenen Überbrückungsschalter mit dem Energiespeicher verbunden oder ist indirekt über den DCDC-Wandler mit dem Energiespeicher verbunden. Das Fahrzeugbordnetz weist ferner einen Überbrückungsschalter auf, der den elektrischen Energiespeicher mit dem Wechselrichter schaltbar verbindet. Der Überbrückungsschalter entspricht vorzugsweise dem vorangehend und im Folgenden genannten Überbrückungsschalter, der in gleicher Weise die Seiten des DCDC-Wandlers überbrückt. Insbesondere ist der Überbrückungsschalter parallel zu dem DCDC-Wandler bzw. parallel zu den Seiten des DCDC-Wandlers anschlossen. Der Überbrückungsschalter verbindet die beiden Seiten des DCDC-Wandlers, zwischen denen die Spannungswandlung stattfindet. Mit anderen Worten überbrückt der Überbrückungsschalter den DCDC-Wandler (in schaltbarer Weise). Das Fahrzeugbordnetz weist insbesondere eine Steuereinheit auf. Die Steuereinheit kann ansteuernd mit dem Überbrückungsschalter und insbesondere auch ansteuernd mit dem DCDC-Wandler verbunden sein. Die Steuereinheit ist eingerichtet, ein Boostsignal zu empfangen. Das Boostsignal gibt eine besonders hohe Leistungsanforderung an den Inverter wieder. Das Boostsignal kann sich auf einen Traktionszustand (in welchem der Wechselrichter Wechselleistung abgibt) beziehen. Das Boostsignal kann sich ferner auf einen Rekuperationszustand (in welchem der Wechselrichter Wechselleistung aufnimmt) beziehen. Die Steuereinheit ist vorzugsweise eingerichtet, den Überbrückungsschalter in einem geschlossenen Zustand vorzusehen, wenn das Boostsignal vorliegt, und in einem offenen Zustand vorzusehen, wenn das Boostsignal nicht vorliegt. Durch den geschlossenen Überbrückungsschalter wird der Wechselrichter direkt von dem Energiespeicher versorgt. Dadurch ist die Leistung nicht begrenzt durch die Maximalleistung des DCDC-Wandlers (gegeben durch die Auslegung des DCDC-Wandlers). Die Nennleistung des Wechselrichters ist vorzugsweise höher als die Nennleistung des DCDC-Wandlers. Der Wechselrichter hat vorzugsweise eine Nennleistung, die mindestens 150%, 200%, 400% oder 600% der Nennleistung des DCDC-Wandlers beträgt. Die in diesem Absatz genannte Steuereinheit kann der Steuereinheit entsprechen, die in den folgenden und vorangehenden Passagen erwähnt ist. Die Steuereinheit kann eingerichtet sein, den Überbrückungsschalter in einem geschlossenen Zustand vorzusehen, wenn das Boostsignal vorliegt oder wenn die Abweichung zwischen dem Spannungszustand des Energiespeichers und der Spannung des Gleichstrom-Übertragungsanschlusses nicht größer als ein vorgegebener Betrag ist. Die Steuereinheit kann eingerichtet sein, den Überbrückungsschalter in einem offenen Zustand vorzusehen, wenn das Boostsignal nicht vorliegt oder wenn die Abweichung zwischen dem Spannungszustand des Energiespeichers und der Spannung des Gleichstrom-Übertragungsanschlusses größer als der vorgegebene Betrag ist. Somit kann der Überbrückungsschalter für mehrere Funktionen genutzt werden: zum einen zur direkten Kopplung des Energiespeichers mit dem Wechselrichter, wenn eine besonders hohe Traktions- oder Rekuperationsleistung angefordert wird, und zum anderen zur direkten Kopplung des Energiespeichers mit dem Gleichspannungs-Übertragungsanschlusses, wenn der Spannungszustand des Energiespeichers (insbesondere die Leerlaufspannung) nicht mehr als um einen vorbestimmten Betrag von der Spannung des Gleichspannungs-Übertragungsanschlusses abweicht. In beiden Fällen wird der DCDC-Wandler von dem Überbrückungsschalter überbrückt, um den Energiespeicher direkt mit einer Leistungsquelle (Ladestation oder E-Motor als Generator) oder Leistungssenke (Ladestation bei der Rückspeisung oder E-Motor als Antrieb) zu verbinden. Ansonsten wird dem Energiespeicher zur Spannungsanpassung der DCDC-Wandler vorgeschaltet.

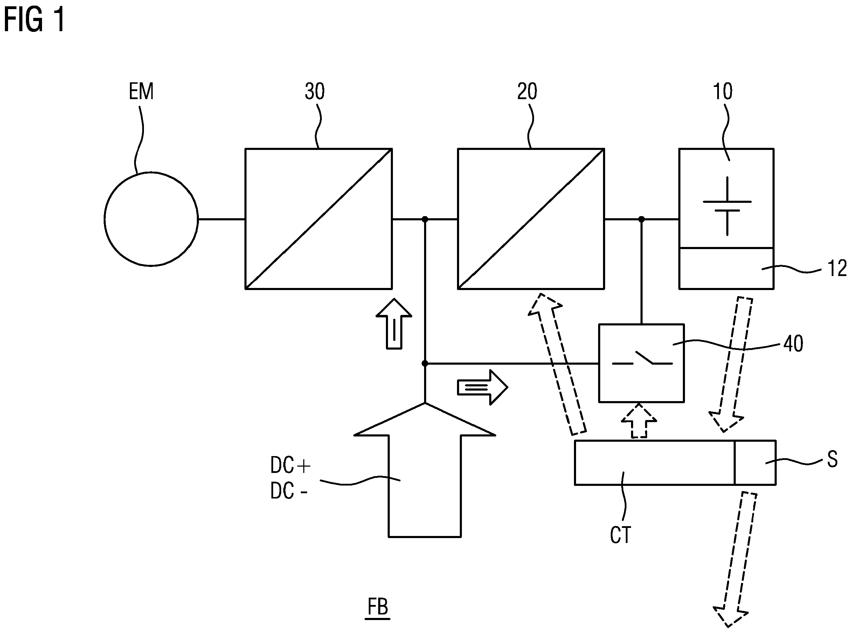

Die Figuren 1, 2 und 3 dienen zur näheren Erläuterung der hier beschriebenen Vorrichtungen und Verfahrensweisen und zeigen (unter anderem) beispielhafte Fahrzeugbordnetze sowie Ladestationen.

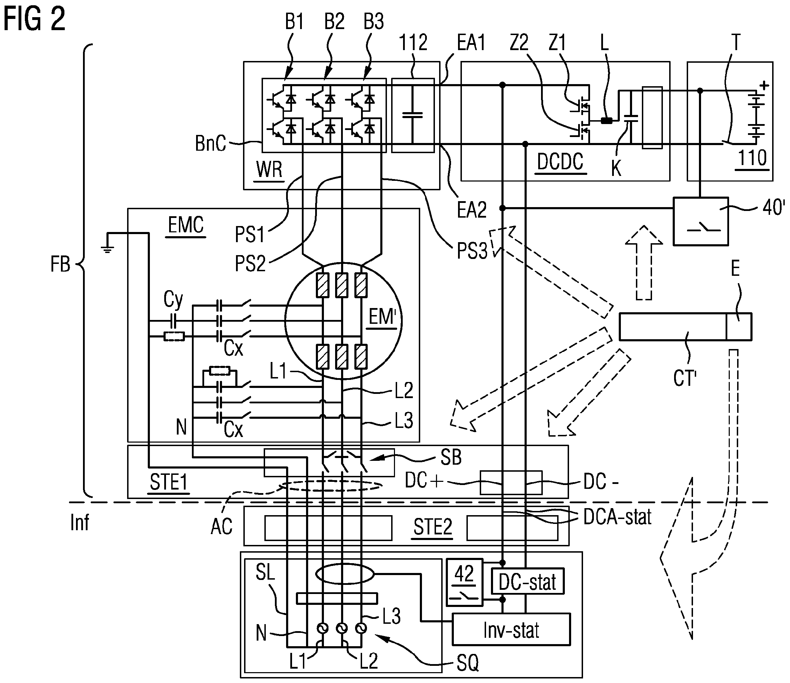

Die Figuren 1 und 2 zeigen jeweils Ausführungsformen eines Fahrzeugbordnetzes FB mit einem Energiespeicher 10 bzw. 110 und einer elektrischen Maschine EM bzw. EM', die über einen Wechselrichter 30 bzw. WR miteinander verbunden sind. Ein Gleichstrom-Übertragungsanschluss DC+, DC- ("DC-Plugin") weist eine positive Schiene DC+ und eine negative Schiene DC- auf. Ein DCDC-Wandler 20 bzw. DCDC verbindet den DC-Plugin mit dem Energiespeicher 10 bzw. 110.

In der Figur 1 ist eine Steuereinheit CT dargestellt, die zumindest ein Signal (welches die Stromaufnahmefähigkeit des Energiespeichers charakterisiert) von dem Energiespeicher 10 erhält, siehe auf CT gerichteten Pfeil. Die Steuereinheit CT ist ansteuernd mit dem DCDC-Wandler 20 verbunden sowie mit dem Überbrückungsschalter 40.

Ist der Überbrückungsschalter 40 offen, wird Energie über den DC-Plugin DC+, DC- über den Pfad I an den DCDC-Wandler 20 übertragen, welcher die Energie wandelt, insbesondere durch Erhöhung oder allgemein Anpassung der Spannung an eine (aktuelle) Spannung des Energiespeichers 10. Ist der Überbrückungsschalter 40 geschlossen, wird Energie über den DC-Plugin DC+, DC- über den Pfad II und über den Überbrückungsschalter 40 (der als Bypass des DCDC-Wandlers 20 dient) übertragen, welcher die Energie wandelt, an den Energiespeicher 10 übertragen. Ist die Abweichung der Spannungen zwischen dem Energiespeicher 10 und dem Gleichspannungsanschluss DC+, DC- höher als ein vorbestimmter Betrag, wird der Pfad I gewählt. Sind die Spannungen ausreichend ausgeglichen (d.h. die Abweichung übersteigt den Betrag nicht), dann wird nicht indirekt über den DCDC-Wandler 20, sondern direkt über den Überbrückungsschalter 40 geladen.

An den DCDC-Wandler 20 ist über einen Inverter 30 die elektrische Maschine EM angeschlossen, die etwa im Fahrbetrieb (nicht dargestellt) von dem Inverter 30 versorgt wird, der wiederum eine vom DCDC-Wandler erhöhte Spannung des Energiespeichers 10 erhält. Der Ladebetrieb wird durch die Pfade I und II wiedergegeben. Der Pfad I wird am Anfang des Ladens verwendet, wenn der DCDC-Wandler zur Spannungsanpassung notwendig ist, da die Spannung des Energiespeichers und die Spannung am DC-Plugin zu verschieden sind. Der Pfad II wird in einer folgenden Phase des Ladens verwendet, wenn der DCDC-Wandler nicht mehr zur Spannungsanpassung notwendig ist, da die Spannung des Energiespeichers und die Spannung am DC-Plugin ausreichend nahe beieinanderliegen, um eine Überlastung des Energiespeichers zu vermeiden. Der Pfad II kann Leistung darstellen, die mindestens das Doppelte, Dreifache oder das Vierfache der Leistung des Pfads I beträgt. Entsprechend kann der DCDC-Wandler für eine Leistung ausgelegt sein, die nur einen Teil (nicht mehr als 50%, 30% oder 20 oder auch nicht mehr 10%) der Leistung beträgt, gemäß welcher der Überbrückungsschalter ausgelegt ist. Auch bei einer Rückspeisung kann die hier beschriebene Vorgehensweise verwendet werden, indem über den Pfad I Leistung rückgespeist wird, wenn die Spannung des Energiespeichers 10 mehr als ein vorbestimmter Betrag von der Spannung am DC-Plugin DC+, DC- abweicht, und indem über Pfad II rückgespeist wird, wenn die Abweichung der Spannung zwischen dem Energiespeicher 10 und dem DC-Plugin DC+, DC- den Betrag nicht übersteigt.

Um die Spannung am Energiespeicher 10 zu ermitteln, kann die Steuereinheit CT eingerichtet sein, die Spannung durch Messen an dem Energiespeicher zu ermitteln. Ferner kann die Spannung am Energiespeicher 10 durch die Steuereinheit CT ermittelt werden durch Empfangen eines Spannungswerts von einer Batteriemanagementeinheit 12 des Energiespeichers 10. Dies ist mit dem nach unten, zu der Steuereinheit CT hin gerichteten, gestrichelten Pfeil dargestellt.

Die Steuereinheit CT kann eine Sendeeinheit S aufweisen, um den Spannungszustand des Energiespeichers 10 oder einen Schaltzustand des Überbrückungsschalters 40 zu senden, etwa an eine Ladestation. Dies ist mit dem nach unten, von der Steuereinheit CT weg gerichteten, gestrichelten Pfeil dargestellt.

In der Figur 2 ist ein Fahrzeugbordnetz FB dargestellt, das an eine Ladestation Inf angeschlossen ist.

Im Fahrzeugbordnetz FB der Figur 2 ist ein Wechselrichter WR über einen positiven Eingangsstromanschluss EA1 des Wechselrichters WR und einen negativen Eingangsstromanschluss EA2 des Wechselrichters WR an einen Gleichspannungswandler DCDC angeschlossen. Parallel zu den Eingangsstromanschlüssen EA1, EA2 ist ein Zwischenkreiskondensator 112 angeschlossen. Der Wechselrichters WR umfasst drei Brücken B1-B3. Ein Potential bzw. ein Kontakt eines Gleichstrom-Übertragungsanschlusses DC+, DC-, insbesondere die positive Schiene DC+, ist mit dem Gleichspannungswandler DCDC verbunden und ist ferner mit positiven Eingangsstromanschluss EA1 des Wechselrichters WR verbunden.

Die Figur 2 zeigt einen Wechselrichter mit Vollbrücken B1-B3, die auch als Zweipulsbrücken bezeichnet werden, da jede der beiden Halbwellen einer Vollwelle über einen der beiden Schalter der jeweiligen Brücke übertragen wird. In der Figur 2 wird die B6C-Brückenschaltung, die sich aus den einzelnen Brücken B1-3 ergibt, als BnC bezeichnet, wobei n ein Platzhalter für die Anzahl der Schaltelemente (hier: 3 * 2 = 6) ist. In der Figur 2 ist ein Wechselrichter WR1 dargestellt, der als mehrphasige Vollwellenbrückenschaltung realisiert ist. Der Wechselrichter WR ist eine B6C-Brückenschaltung mit Zwischenkreiskondensator 112.

Die gestrichelte Linie markiert eine Schnittstelle zwischen dem Fahrzeugbordnetz und der stationären Ladestation Inf.

In der Figur 2 ist der Wechselrichter WR über die elektrische Maschine EM indirekt über den Gleichspannungswandler DCDC mit dem Gleichstrom-Übertragungsanschluss DC+, DC- verbunden. Dadurch ist eine Spannungsanpassung möglich, insbesondere überlappende Spannungsbänder der elektrischen Maschine EM bzw. des Wechselrichters WR einerseits und dem Energiespeicher 110 andererseits. Der Energiespeicher 110 weist neben Speicherzellen einen Trennschalter T auf. Der Gleichspannungswandler DCDC weist zwei serielle Schalter Z1, Z2 auf, an deren Verknüpfungspunkt sich eine serielle Induktivität L anschließt, welche die seriellen Schalter Z1, Z2 mit einem Zwischenkreiskondensator K des Gleichspannungswandlers DCDC verbindet. Über die Induktivität L ist der Verknüpfungspunkt zwischen den Schaltern Z1 und Z2 mit dem Pluspol + des Energiespeichers 110 verbunden. Der Zwischenkreiskondensator K ist ferner mit dem negativen Eingangsstromanschluss EA2 verbunden; der positive Eingangsstromanschluss EA1 ist über den Schalter Z1 und die Induktivität mit dem Zwischenkreiskondensator K verbunden. Insbesondere wird durch den zwischengeschalteten Gleichspannungswandler DCDC eine Spannung an den Gleichspannungsanschluss DC+, DC- möglich (etwa ca. 400 V), die unter der Betriebsspannung (etwa ca. 800 V) des Energiespeichers 110 liegt.

Die elektrische Maschine EM' der Figur 2 umfasst ein Wicklungssystem mit drei Phasen L1-L3 und mit Zwischenabgriff in jeder der Wicklungen, wodurch jede Wicklung zweigeteilt wird. Die Zweiteilung ist nicht notwendigerweise eine Aufteilung in gleich lange Wicklungsabschnitte, sondern richtet sich insbesondere nach den Erfordernissen, die einem Filter EMC gestellt werden. Der Filter EMC mit den Kondensatoren Cx und Cy ist an die Zwischenabgriffe und an dasjenige Wicklungsende angeschlossen, welches entgegengesetzt zum Wechselrichter WR2 bzw. zu dessen Phasenanschlüssen PS1-3 ist. Da die Kondensatoren Cx und Cy mit den Wicklungen der elektrischen Maschine interagieren, können die Wicklungen bzw. Abschnitte hiervon in funktioneller Sicht einen Teil des Filters EMC darstellen. Der Filter EMC ist ferner mit einem Nullleiter N verbunden. Die Kondensatoren Cx, Cy der Figur 2 und somit der Filter EMC sind (aufgrund von Reihenschaltern) von der elektrischen Maschine EM' abtrennbar.

Eine Schaltvorrichtung SB verbindet die elektrische Maschine EM' bzw. deren Phasen L1-L3 mit einem Wechselstromanschluss AC des Fahrzeugbordnetzes FB. Die Schaltvorrichtung SB umfasst zwei Schaltelemente bzw. Auftrennschalter, die die Phasen untereinander gesteuert verbinden, insbesondere um einen Sternpunkt zu bilden oder (vorzugsweise unvollständig) aufzulösen. Die Schaltvorrichtung kann insbesondere nur einen Auftrennschalter aufweisen, der zwei Wicklungen gesteuert verbindet. Die verbleibende Wicklung (en) ist bzw. sind vorzugsweise permanent bzw. über eine direkte Verbindung mit den anderen Wicklungen verbunden. Mit anderen Worten sind die Auftrennschalter bzw. ist der Auftrennschalter derart angeschlossen, dass bei offenem Schalter bzw. offenen Schaltern sich eine unvollständige (Stern- oder Dreiecks)konfiguration ergibt, oder die Konfiguration vollständig aufgelöst wird (durch trennen aller Wicklungsenden voneinander), wobei die Trennschalter gewährleisten, dass nicht alle Wicklungen von einem Gleichstrom durchflossen werden. Die Steuereinheit CT' kann mit der Schaltvorrichtung SB ansteuernd verbunden sein, um im Lade- und/oder Rückspeisemodus das vorangehend Erwähnte zu realisieren, und um in einem Motor- oder Generatormodus alle Wicklungen miteinander zu verbinden (etwa zur Herstellung einer symmetrischen bzw. vollständigen Konfiguration). Ferner kann im Lade- und/oder Rückspeisemodus vorgesehen sein, dass die Steuereinrichtung die Schaltvorrichtung SB ansteuert, Gleichstrom durch unterschiedliche Wicklungen bzw. Wicklungsuntergruppen zu übertragen. Die Steuereinrichtung ist zu einer derartigen Ansteuerung ausgestaltet. Dadurch wird in der elektrischen Maschine die Abwärme gleichmäßiger erzeugt.

Die Schaltvorrichtung SB umfasst ferner pro Phase einen Trennschalter, wobei die Trennschalter zwischen der elektrischen Maschine EM' und dem Wechselstromanschluss AC angeschlossen sind.

Die Schnittstelle (gestrichelt dargestellt) wird realisiert durch eine elektromechanische Schnittstelle, die seitens des Fahrzeugbordnetzes FB einen ersten Steckverbinder STE1 und seitens der Infrastruktur Inf einen hierzu komplementären Steckverbinder STE2 bildet. Der erste Steckverbinder ist insbesondere Teil eines Plugin-Inlets. Der zweite Steckverbinder STE2 ist stationär, insbesondere am Ende eines Ladekabels der Ladestation Inf. Es sind seitens der Ladestation Stromquellen SQ für Wechselstrom vorgesehen, welche den Zugang zu einem Wechselstrom-Versorgungsnetz wiedergeben sollen. Es werden drei Phasen L1-L3 ausgebildet, sowie ein Neutralleiter N und ein Schutzleiter SL. Diese haben Entsprechungen auf der Fahrzeugseite, die der besseren Übersicht wegen die gleichen Bezeichnungen aufweisen.

Der Gleichstromanschluss DCA-stat der Ladestation ist über einen Gleichspannungswandler DC-stat der Ladestation mit einem Inverter bzw. Gleichrichter Inv-stat der Ladestation Inf verbunden, welcher wiederum an ein Wechselstrom-Versorgungsnetz angeschlossen ist. Alternativ kann eine Gleichspannungsquelle vorgesehen sein, an die der Gleichspannungswandler DC-stat angeschlossen ist. Der Gleichspannungswandler DC-stat ist parallel zu dem Schalter 42 angeschlossen, der im geschlossenen Zustand den Gleichspannungswandler DC-stat überbrückt. Die Steuereinheit CT' (Fahrzeugbordnetz FB) steuert auch diesen Schalter 42 an, abhängig davon, ob ein geschlossener Zustand zu einer Überlastung des Energiespeichers 110 oder des DCDC-Wandlers DCDC des Fahrzeugbordnetzes führen würde (dann bleibt der Schalter 42 offen), oder nicht (dann kann der Schalter 42 geschlossen werden).

Die Steuereinheit CT' des Fahrzeugbordnetzes ist eingerichtet, den Spannungszustand oder einen Schaltzustand des Energiespeichers 110 bzw. des Überbrückungsschalters 40' an diese Ladestation Inf zu übermitteln. Dies ist durch den gebogenen, gestrichelten Pfeil dargestellt.

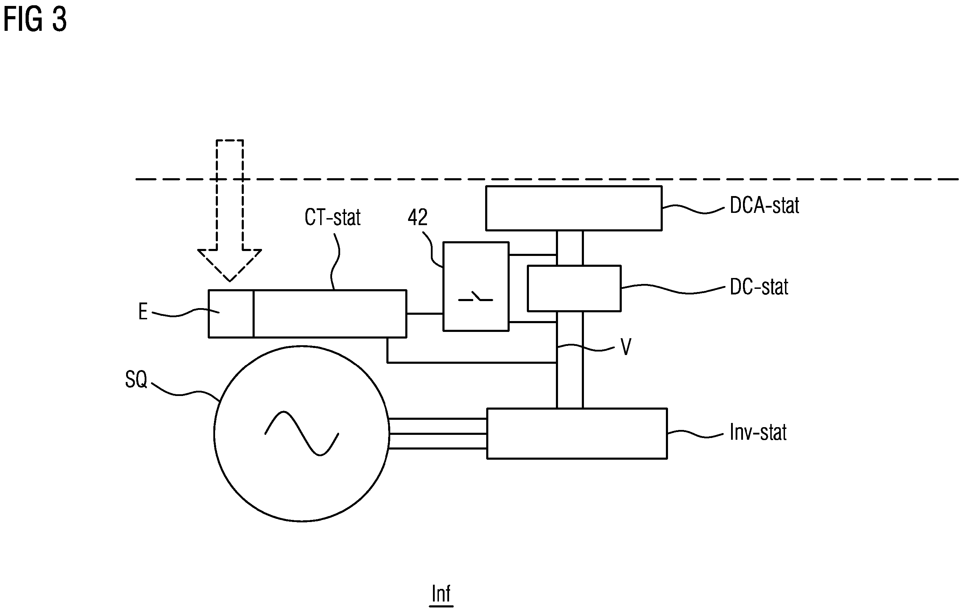

Die Figur 3 zeigt eine Ladestation Inf mit einem Inverter Inv-stat, einem Gleichspannungsladeanschluss DCA-stat und einem Gleichspannungswandler DC-stat. Über den Gleichspannungswandler DC-stat ist der Inverter Inv-stat mit dem stationären Gleichspannungsladeanschluss DCA-stat verbunden. Parallel bzw. in überbrückender Weise ist an den stationären Gleichspannungswandler DC-stat ein stationärer Bypassschalter 42 angeschlossen. Die Figur 3 zeigt insbesondere die Ladestation, die in Figur 2 dargestellt ist.

Die Ladestation Inf weist eine Steuereinheit CT-stat auf. Diese ist ansteuernd mit dem Bypassschalter 42 verbunden. Die Steuereinheit CT-stat verfügt über eine nicht anspruchsgemäße Empfangseinheit E. Diese ist eingerichtet, einen Spannungszustand (eines Energiespeichers eines Fahrzeugbordnetzes) oder einen Schaltzustand (eines Überbrückungsschalters eines Fahrzeugbordnetzes) zu empfangen, etwa von einer Sendereinheit S, wie sie in Fig. 2 dargestellt ist. Dies ist durch den gestrichelten Doppelpfeil der Figur 3 dargestellt, der inhaltlich dem gebogenen Pfeil der Figur 2 entspricht. Der Inverter Inv-stat verbindet den Gleichspannungswandler DC-stat mit einer (dreiphasigen) Wechselspannungsquelle SQ, die insbesondere einem Anschluss an ein öffentliches Wechselstrom-Versorgungsnetz oder einem Wechselstrom-Versorgungsnetz entsprechen kann.

Ein Verbindungspunkt V verbindet den Inverter Inv-stat mit dem Gleichspannungswandler DC-stat. Dieser ist (zumindest in logischer Sicht) mit der Steuereinheit CT-stat verbunden. Die Steuereinheit CT-stat ist dadurch eingerichtet, die Spannung am Verbindungspunkt V zu ermitteln. Ferner ist die Steuereinheit CT-stat eingerichtet, die Spannung am Gleichspannungsladeanschluss DCA-stat zu ermitteln. Die Steuereinheit CT-stat ist eingerichtet, eine Abweichung zwischen diesen Spannungen zu ermitteln und abzuschätzen, ob diese Abweichung einen vorbestimmten Betrag überschreitet, oder nicht.

Die Figur 1 dient ferner zur Erläuterung einer weiteren Ausführungsform bzw. weiterer Funktion des hier beschriebenen Bordnetzes, die zum näheren Verständnis dienen und die nicht anspruchsgemäß sind. In einer Ausführungsform umfasst das Fahrzeugbordnetz FB einen elektrischen Energiespeicher 10, einen Gleichspannungswandler 20 und einen Wechselrichter 30. Der Wechselrichter 30 ist über den Gleichspannungswandler 20 mit dem Energiespeicher 10 verbunden. Das Fahrzeugbordnetz FB umfasst ferner eine elektrische Maschine EM. Die elektrische Maschine EM ist dem Inverter 30 nachgeschaltet. Das Fahrzeugbordnetz FB weist ferner einen Überbrückungsschalter 40 auf, der den elektrischen Energiespeicher mit dem Wechselrichter 30 schaltbar verbindet. Die elektrische Maschine ist über den Inverter mit dem Energiespeicher verbunden, insbesondere in direkter Weise, wenn der Überbrückungsschalter 40 geschlossen ist, und in indirekter Weise über den Gleichspannungswandler 20 (auch als DCDC-Wandler bezeichnet), wenn der Überbrückungsschalter 40 offen ist.

In dieser weiteren Ausführungsform umfasst das Fahrzeugbordnetz FB eine Steuereinheit CT. Diese ist mit dem Überbrückungsschalter 40 und insbesondere mit dem Gleichspannungswandler 20 ansteuernd verbunden. Die Steuereinheit CT kann eingerichtet sein, den Gleichspannungswandler 20 in einem inaktiven Zustand vorzusehen, wenn der Überbrückungsschalter 40 geschlossen ist, und den Gleichspannungswandler 20 in einem aktiven Zustand vorzusehen, wenn der Überbrückungsschalter 40 offen ist. Die Steuereinheit CT kann eingerichtet sein, ein Boostsignal zu empfangen. Die Steuereinheit CT kann eingerichtet sein, den Überbrückungsschalter 40 in einem geschlossenen Zustand vorzugsehen, wenn das Boostsignal vorliegt. Die Steuereinheit CT kann eingerichtet sein, den Überbrückungsschalter 40 in einem offenen Zustand vorzugsehen, wenn das Boostsignal nicht vorliegt (etwa wenn ein Komplementärsignal hierzu vorliegt) . Die Steuereinheit kann die in diesem Absatz erwähnten Funktionen aufweisen, sowie Funktionen, die vorangehend oder nachfolgend beschrieben sind. Alternativ kann die Steuereinheit kann die in diesem Absatz erwähnten Funktionen aufweisen und nicht die vorangehend oder nachfolgend erwähnten Funktionen und es kann eine weitere Steuereinheit vorgesehen sein, die die vorangehend oder nachfolgend erwähnten Funktionen aufweist und nicht die in diesem Absatz erwähnten Funktionen. Die Steuersignale der beiden Steuereinheiten können ODER-verknüpft werden, um derart kombiniert den Überbrückungsschalter anzusteuern.

Das Boostsignal wird von der Steuereinheit vorzugsweise unterdrückt oder ignoriert, wenn das Fahrzeug sich nicht in einem Fahrzustand befindet. Befindet sich das Fahrzeug in einem Fahrzustand, wird die Auswertung des Spannungszustands des Energiespeichers, wie sie beim Laden oder Rückspeisen verwendet wird, ignoriert oder nicht verwendet, um den Überbrückungsschalter 40 anzusteuern. Dies wird insbesondere von der Steuereinheit CT realisiert.

## Patentansprüche

1. Fahrzeugbordnetz (FB) mit einem elektrischen Energiespeicher (10, 110), einem Gleichspannungswandler (DCDC, 20) und einem Gleichstrom-Übertragungsanschluss (DC+, DC-), der eingerichtet ist, mit einem Ladestecker verbunden zu werden, wobei der Gleichstrom-Übertragungsanschluss (DC+, DC-) über den Gleichspannungswandler (DCDC; 20) mit dem Energiespeicher (10, 110) verbunden ist, wobei
das Fahrzeugbordnetz (FB) ferner einen Überbrückungsschalter (40, 40') aufweist, der den elektrischen Energiespeicher (10, 110) mit dem Gleichstrom-Übertragungsanschluss (DC+, DC-) schaltbar verbindet und wobei das Fahrzeugbordnetz (FB) eine Steuereinheit (CT) aufweist, die ansteuernd mit dem Überbrückungsschalter (40, 40') verbunden ist, wobei die Steuereinheit (CT) eingerichtet ist, die Spannung des Energiespeichers (10) zu ermitteln, sowie mit dem Gleichstrom-Übertragungsanschluss (DC+/DC-) verbunden und eingerichtet ist, dessen Spannung zu ermitteln,
**dadurch gekennzeichnet, dass**
die Steuereinheit (CT) ferner eingerichtet ist, eine Abweichung zwischen dem Spannungszustand des Energiespeichers (10) und der Spannung des Gleichstrom-Übertragungsanschlusses (DC+/DC-) zu ermitteln und den Überbrückungsschalter (40, 40') in einem geschlossenen Zustand vorzusehen, wenn die Abweichung nicht größer als ein vorgegebener Betrag ist, und den Überbrückungsschalter (40, 40') in einem offenen Zustand vorzusehen, wenn die Abweichung größer als ein vorgegebener Betrag ist.

2. Fahrzeugbordnetz (FB) nach Anspruch 1, wobei der Gleichspannungs-Übertragungsanschluss (DC+/DC-) ein negatives Potential aufweist, das mit einem negativen Anschluss des Gleichspannungswandlers (DCDC; 20) verbunden ist, der Gleichspannungs-Übertragungsanschluss (DC+/DC-) ein positives Potential aufweist, das mit einem positiven Anschluss des Gleichspannungswandlers (DCDC; 20) verbunden ist, und der Überbrückungsschalter (40, 40') den positiven Anschluss des Gleichspannungswandlers (DCDC; 20) mit einem Pluspol (+) des elektrischen Energiespeichers (10, 110) verbindet.

3. Fahrzeugbordnetz nach Anspruch 1 oder 2, wobei die Steuereinheit (CT) mit dem Energiespeicher (10) verbunden ist.

4. Fahrzeugbordnetz nach Anspruch 3, wobei der Spannungszustand des Energiespeichers (10) einen Wert dargestellt, der eine Klemmenspannung, eine Leerlaufspannung oder einen Ladezustand des Energiespeichers (10) wiedergibt.

5. Fahrzeugbordnetz nach Anspruch 3 oder 4, wobei die Steuereinheit (CT) ferner eine Sendeeinheit (S) aufweist, die eingerichtet ist, den Spannungszustand des Energiespeichers (10), die Abweichung oder einen Schaltzustand des Überbrückungsschalters (40) des Fahrzeugbordnetzes (FB) zu senden.

6. Fahrzeugbordnetz nach Anspruch 3, 4 oder 5, wobei der vorgegebene Betrag nicht mehr als 5%, 2% oder 1% der Nennspannung des Energiespeichers (10) beträgt.

7. Fahrzeugbordnetz nach einem der Ansprüche 3-6, wobei die Steuereinheit (CT) ansteuernd mit dem Gleichspannungswandler (DCDC, 20) verbunden ist und eingerichtet ist, diesen bei geschlossenem Überbrückungsschalter (40) in einem inaktiven Zustand vorzusehen und bei offenen Überbrückungsschalter (40) in einem aktiven Zustand vorzusehen.

8. Ladestation (Inf) mit einem stationären Inverter oder Gleichrichter (Inv-stat), einem stationären Gleichspannungsladeanschluss (DCA-stat) und einem stationären Gleichspannungswandler (DC-stat), der den Inverter oder Gleichrichter (Inv-stat) mit dem stationären Gleichspannungsladeanschluss (DCA-stat) verbindet, wobei ein Verbindungspunkt (V) den Inverter oder Gleichrichter (Inv-stat) mit dem Gleichspannungswandler (DC-stat) verbindet und wobei parallel zu dem stationären Gleichspannungswandler (DC-stat) ein stationärer Bypassschalter (42) angeschlossen ist, und die Ladestation eine stationäre Steuereinheit (CT-stat) aufweist, die ansteuernd mit dem Bypassschalter (42) verbunden ist,
**dadurch gekennzeichnet, dass**
die Steuereinheit (CT-stat) eingerichtet ist, die Spannung am Verbindungspunkt (V) sowie am Gleichspannungsladeanschluss (DCA-stat) zu ermitteln und eine Abweichung zwischen diesen Spannungen zu ermitteln,
wobei ferner die stationäre Steuereinheit (CT-stat) eingerichtet ist, den stationären Bypassschalter (42) in einem geschlossenen Zustand vorzusehen, wenn die Abweichung nicht größer als ein vorgegebener Betrag ist und eingerichtet ist, den Bypassschalter (42) in einem offenen Zustand vorzusehen, wenn die Abweichung größer als der vorgegebene Betrag ist.

9. Verfahren zur Übertragung von elektrischer Energie zwischen einem Energiespeicher (110) eines Fahrzeugbordnetzes (FB) und einer Ladestation (Inf) über einen Gleichspannungswandler (20) des Fahrzeugbordnetzes (FB), einen stationären Gleichspannungswandler (DC-stat) der Ladestation (Inf) oder über beide Gleichspannungswandler (20; DC-stat), wobei die Energie zwischen dem Energiespeicher (10, 110) und der Ladestation (Inf) über den Gleichspannungswandler (20) des Fahrzeugbordnetzes (FB), über den stationären Gleichspannungswandler (DC-stat) der Ladestation (Inf) oder über beide Gleichspannungswandler (20; DC-stat) übertragen wird, **dadurch gekennzeichnet, dass** der oder die Gleichspannungswandler (20; DC-stat) überbrückt wird bzw. werden und somit die Energie zwischen Energiespeicher (110) und Ladestation (Inf) direkt übertragen wird, wenn die Spannungsdifferenz zwischen derjenigen Spannung, welche an der dem Energiespeicher (110) abgewandten Seite des betreffenden Spannungswandlers (20; DC-stat) anliegt, und der Leerlaufspannung des Energiespeichers (110) unter einem vorgegebenen Betrag liegt.

## Claims

1. Vehicle electrical system (FB) having an electrical energy store (10, 110), a direct voltage converter (DCDC, 20) and a direct current transmission connection (DC+, DC-) which is configured to be connected to a charging plug, wherein the direct current transmission connection (DC+, DC-) is connected to the energy store (10, 110) via the direct voltage converter (DCDC; 20), wherein
the vehicle electrical system (FB) also has a bypass switch (40, 40') which connects the electrical energy store (10, 110) in a switchable fashion to the direct current transmission connection (DC+, DC-), and wherein the vehicle electrical system (FB) has a control unit (CT) which is connected in an actuating fashion to the bypass switch (40, 40'), wherein the control unit (CT) is configured to determine the voltage of the energy store (10) and is connected to the direct current transmission connection (DC+/DC-) and is configured to determine the voltage thereof,
**characterized in that**
the control unit (CT) is also configured to determine a deviation between the voltage state of the energy store (10) and the voltage of the direct current transmission connection (DC+/DC-) and to provide the bypass switch (40, 40') in a closed state if the deviation is not greater than a predefined magnitude, and to provide the bypass switch (40, 40') in an open state if the deviation is greater than a predefined magnitude.

2. Vehicle electrical system (FB) according to Claim 1, wherein the direct voltage transmission connection (DC+/DC-) has a negative potential which is connected to a negative connection of the direct voltage converter (DCDC; 20), the direct voltage transmission connection (DC+/DC-) has a positive potential which is connected to a positive connection of the direct voltage converter (DCDC; 20), and the bypass switch (40, 40') connects the positive connection of the direct voltage converter (DCDC; 20) to a positive pole (+) of the electrical energy store (10, 110).

3. Vehicle electrical system according to Claim 1 or 2, wherein the control unit (CT) is connected to the energy store (10).

4. Vehicle electrical system according to Claim 3, wherein the voltage state of the energy store (10) constitutes a value which represents a terminal voltage, an open-circuit voltage or a state of charge of the energy store (10).

5. Vehicle electrical system according to Claim 3 or 4, wherein the control unit (CT) also has a transmitter unit (S) which is configured to transmit the voltage state of the energy store (10), the deviation or a switched state of the bypass switch (40) of the vehicle electrical system (FB).

6. Vehicle electrical system according to Claim 3, 4 or 5, wherein the predefined magnitude is not more than 5%, 2% or 1% of the nominal voltage of the energy store (10).

7. Vehicle electrical system according to one of Claims 3-6, wherein the control unit (CT) is connected in an actuating fashion to the direct voltage converter (DCDC, 20) and is configured to provide the latter in an inactive state in the case of a closed bypass switch (40) and in an active state in the case of an open bypass switch (40).

8. Charging station (Inf) having a fixed inverter or rectifier (Inv-stat), a fixed direct voltage charging connection (DCA-stat) and a fixed direct voltage converter (DC-stat) which connects the inverter or rectifier (Inv-stat) to the fixed direct voltage charging connection (DCA-stat), wherein a connecting point (V) connects the inverter or rectifier (Inv-stat) to the direct voltage converter (DC-stat), and wherein a fixed bypass switching device (42) is connected in parallel with the fixed direct voltage converter (DC-stat), and the charging station has a fixed control unit (CT-stat) which is connected in an actuating fashion to the bypass switching device (42),
**characterized in that**
the control unit (CT-stat) is configured to determine the voltage at the connecting point (V) and at the direct voltage charging connection (DCA-stat) and to determine a deviation between these voltages,
wherein the fixed control unit (CT-stat) is also configured to provide the fixed bypass switching device (42) in a closed state if the deviation is not greater than a predefined magnitude, and is configured to provide the bypass switching device (42) in an open state if the deviation is greater than the predefined magnitude.

9. Method for transmitting electrical energy between an energy store (110) of a vehicle electrical system (FB) and a charging station (Inf) via a direct voltage converter (20) of the vehicle electrical system (FB), a fixed direct voltage converter (DC-stat) of the charging station (Inf) or via both direct voltage converters (20; DC-stat), wherein the energy is transmitted between the energy store (10, 110) and the charging station (Inf) via the direct voltage converter (20) of the vehicle electrical system (FB), via the fixed direct voltage converter (DC-stat) of the charging station (Inf) or via both direct voltage converters (20; DC-stat), **characterized in that** the direct voltage converter or converters (20; DC-stat) is/are bypassed and the energy is thus directly transmitted between the energy store (110) and the charging station (Inf) if the voltage difference between that voltage which is present on the side of the respective voltage converter (20; DC-stat) facing away from the energy store (110) and the open-circuit voltage of the energy store (110) is below a predefined magnitude.

## Revendications

1. Réseau de bord de véhicule (FB) comprenant un accumulateur d'énergie électrique (10, 110), un convertisseur de tension continue (DCDC, 20) et une borne de transmission de courant continu (DC+, DC-) qui est conçue pour être reliée à un connecteur de charge, la borne de transmission de courant continu (DC+, DC-) étant reliée à l'accumulateur d'énergie (10, 110) par le biais du convertisseur de tension continue (DCDC ; 20), le réseau de bord de véhicule (FB) comportant également un commutateur de pontage (40, 40') qui relie l'accumulateur d'énergie électrique (10, 110) à la borne de transmission de courant continu (DC+, DC-) de manière commutable et le réseau de bord de véhicule (FB) comportant une unité de commande (CT) qui est reliée par activation au commutateur de pontage (40, 40'), l'unité de commande (CT) étant conçue pour déterminer la tension de l'accumulateur d'énergie (10) et étant reliée à la borne de transmission de courant continu (DC+/DC-) et conçue pour déterminer la tension de celle-ci,
**caractérisé en ce que**
l'unité de commande (CT) est en outre conçue pour déterminer un écart entre l'état de tension de l'accumulateur d'énergie (10) et la tension de la borne de transmission de courant continu (DC+/DC-) et pour prévoir le commutateur de pontage (40, 40') dans un état fermé lorsque l'écart n'est pas supérieur à une valeur absolue spécifiée, et pour prévoir le commutateur de pontage (40, 40') dans un état ouvert lorsque l'écart est supérieur à une valeur absolue spécifiée.

2. Réseau de bord de véhicule (FB) selon la revendication 1, la borne de transmission de tension continue (DC+/ DC-) ayant un potentiel négatif qui est relié à une borne négative du convertisseur de tension continue (DCDC ; 20), la borne de transmission de tension continue (DC+/DC-) ayant un potentiel positif qui est relié à une borne positive du convertisseur de tension continue (DCDC ; 20), et le commutateur de pontage (40, 40') reliant la borne positive du convertisseur de tension continue (DCDC ; 20) à un pôle positif (+) de l'accumulateur d'énergie électrique (10, 110).

3. Réseau de bord de véhicule selon la revendication 1 ou 2, l'unité de commande (CT) étant reliée à l'accumulateur d'énergie (10).

4. Réseau de bord de véhicule selon la revendication 3, l'état de tension de l'accumulateur d'énergie (10) présentant une valeur qui reflète une tension aux bornes, une tension de circuit ouvert ou un état de charge de l'accumulateur d'énergie (10).

5. Réseau de bord de véhicule selon la revendication 3 ou 4, l'unité de commande (CT) comportant également une unité d'émission (S) qui est conçue pour envoyer l'état de tension de l'accumulateur d'énergie (10), l'écart ou un état de commutation du commutateur de pontage (40) du réseau de bord de véhicule (FB).

6. Réseau de bord de véhicule selon la revendication 3, 4 ou 5, la valeur absolue spécifiée n'étant pas supérieure à 5 %, 2 % ou 1 % de la tension nominale de l'accumulateur d'énergie (10).

7. Réseau de bord de véhicule selon l'une des revendications 3 à 6, l'unité de commande (CT) étant reliée au convertisseur de tension continue (DCDC, 20) par activation et étant conçue pour prévoir celui-ci dans un état inactif lorsque le commutateur de pontage (40) est fermé et dans un état actif lorsque le commutateur de pontage (40) est ouvert.

8. Station de charge (Inf) comprenant un onduleur ou un redresseur stationnaire (Inv-stat), une borne de charge de tension continue stationnaire (DCA-stat) et un convertisseur de tension continue stationnaire (DC-stat) qui relie l'onduleur ou le redresseur (Inv-stat) à la borne de charge de tension continue stationnaire (DCA-stat), un point de liaison (V) reliant l'onduleur ou le redresseur (Inv-stat) au convertisseur de tension continue (DC-stat) et un commutateur de dérivation stationnaire (42) étant raccordé en parallèle avec le convertisseur de tension continue stationnaire (DC-stat) et la station de charge comportant une unité de commande stationnaire (CT- stat) qui est reliée au commutateur de dérivation (42) par activation,
**caractérisée en ce que**
l'unité de commande (CT-stat) est conçue pour déterminer la tension au point de liaison (V) et au niveau de la borne de charge de tension continue (DCA-stat) et pour déterminer un écart entre ces tensions,
l'unité de commande stationnaire (CT-stat) étant en outre conçue pour prévoir le commutateur de dérivation stationnaire (42) dans un état fermé si l'écart n'est pas supérieur à une valeur absolue spécifiée et étant conçue pour prévoir le commutateur de dérivation (42) dans un état ouvert si l'écart est supérieur à la valeur absolue spécifiée.

9. Procédé de transmission d'énergie électrique entre un accumulateur d'énergie (110) d'un réseau de bord de véhicule (FB) et une station de charge (Inf) par le biais d'un convertisseur de tension continue (20) du réseau de bord de véhicule (FB), d'un convertisseur de tension continue stationnaire (DC-stat) de la station de charge (Inf) ou des deux convertisseurs de tension continue (20 ; DC-stat), l'énergie étant transmise entre l'accumulateur d'énergie (10, 110) et la station de charge (Inf) par le biais du convertisseur de tension continue (20) du réseau de bord de véhicule (FB), du convertisseur de tension continue stationnaire (DC-stat) de la station de charge (Inf) ou des deux convertisseurs de tension continue (20 ; DC-stat),
**caractérisé en ce que** le ou les convertisseurs de tension continue (20 ; DC-stat) sont pontés et ainsi l'énergie est transmise directement entre l'accumulateur d'énergie (110) et la station de charge (Inf) si la différence de tension entre la tension qui est présente du côté du convertisseur de tension concerné (20 ; DC-stat) qui est opposé à l'accumulateur d'énergie (110) et la tension en circuit ouvert de l'accumulateur d'énergie (110) est inférieure à une valeur absolue spécifiée.
